# EUROPÄISCHE PATENTSCHRIFT

(11) **EP 0 670 467 B1**
(45) Veröffentlichungstag und Bekanntmachung des Hinweises auf die Patenterteilung: **09.07.1997**
(21) Anmeldenummer: 94102938.1
(22) Anmeldetag: 26.02.1994
(51) Int. Cl.: G01B 9/02

(54) **Interferometer**
Interferometer
Interféromètre

(43) Veröffentlichungstag der Anmeldung: 06.09.1995
(73) Patentinhaber: Dr. Johannes Heidenhain GmbH, D-83292 Traunreut (DE)
(72) Erfinder: Franz, Andreas, Dr., D-83308 Trostberg (DE); Spanner, Erwin, D-83278 Traunstein (DE)

(56) Entgegenhaltungen:
- DE-A- 4 018 664
- DE-A- 4 028 051
- US-A- 3 090 279
- US-A- 3 547 544
- US-A- 3 614 235

## Beschreibung

Die Erfindung betrifft eine Vorrichtung gemäß dem Oberbegriff des Anspruches 1.

Derartige Vorrichtungen dienen zur interferentiellen Messung von Längen, Winkeln, Gangunterschieden oder Geschwindigkeiten mit Hilfe einer Zweistrahlinterferenz-Anordnung.

Bei Zweistrahl-Interferometern, die den Anordnungen nach Michelson, Mach-Zehnder, oder ähnlichen Anordnungen entsprechen, liefert die mit dem jeweiligen Meßvorgang verbundene Gangunterschieds- bzw. Phasenänderung zwischen den beiden Teilstrahlenbündeln noch keine Information über das Vorzeichen dieser Veränderungen bzw. das Vorzeichen der derungsgeschwindigkeit. Durch verschiedene bekannte Verfahren und Geräte kann diese Information zusätzlich gewonnen und meßtechnisch ausgewertet werden. Den Meßverfahren liegt die prinzipielle Erkenntnis zugrunde, daß phasenverschobene, verkettete sinusförmige Signalpaare, wie sie aus den Interferenzerscheinungen abgeleitet werden, eine Richtungsdiskriminierung ermöglichen.

Die Eigenschaften der bekannten Interferometer, bei denen solche Signalauswertungen vorgenommen werden, sind aus verschiedenen Gründen je nach Anwendung unbefriedigend. Bei einem Teil der Instrumente stören Lichtanteile, die aus dem Interferometer in die Laser-Lichtquelle zurücklaufen. Bei anderen Geräten ist es nicht oder nur mit erheblichem Aufwand möglich, zur Unterteilung der Modulationsperioden eine größere Zahl von optischen Signalen zu erzeugen, die untereinander vorgeschriebene Phasenunterschiede haben. Bei Erzeugung von zueinander phasenverschobenen Signalen fehlen einfache Methoden zur gleichzeitigen Gewinnung von optischen Gegentaktsignalen, die die Arbeitspunkte der Signalverstärker stabilisieren.

Üblicherweise wird ein solches Interferometer wie folgt aufgebaut: Neben einem Strahlteiler und zwei Retroreflektoren sind eine Reihe von polarisationsoptischen Bauteilen nötig, um geeignete phasenverschobene Signale (0°, 90°, 180°, 270°) zu erzeugen und damit eine Richtungserkennung zu ermöglichen.

Diese polarisationsoptischen Bauteile sind groß, teuer und aufwendig zu justieren.

Ein Interferometer, bei dem der Strahlvereiniger als Phasengitter ausgebildet ist, ist aus der DE 40 28 051 A1 bekannt. Der zur gewünschten Richtungsdiskriminierung erforderliche Phasenversatz zwischen den an unterschiedlichen Detektoren anliegenden Interferenzsignalen, wird über polarisationsoptische Bauteile in Form von Polarisatoren und Analysatoren eingestellt. Damit resultieren auch bei einem derartigen Interferometer die oben angesprochenen Probleme.

Der Erfindung liegt deshalb die Aufgabe zugrunde, eine meßtechnisch befriedigende Vorrichtung für interferentielle Messungen beliebiger Art zu schaffen, die besonders einfach aufgebaut ist.

Diese Aufgabe wird von einem Interferometer mit den Merkmalen des Anspruches 1 gelöst.

Besonders vorteilhafte Ausgestaltungen entnimmt man den abhängigen Ansprüchen.

Anhand der Zeichnungen wird mit Hilfe von Ausführungsbeispielen die Erfindung näher erläutert.

Es zeigt
- Figur 1: einen Prinzipaufbau eines erfindungsgemäßen Michelson-Interferometers;
- Figur 2: eine Variante eines Interferometers gemäß Figur 1;
- Figur 3: eine Einzelheit, die mögliche Nachteile zeigt;
- Figur 4: eine von der Einzelheit nach Figur 3 abweichende Einzelheit ohne diese Nachteile;
- Figur 5: eine weitere Einzelheit mit besonderen Vorteilen;
- Figur 6: ein Gitterelement ähnlich der Ausführung in Figur 5 und
- Figur 7: eine Variante eines Gitterelementes.

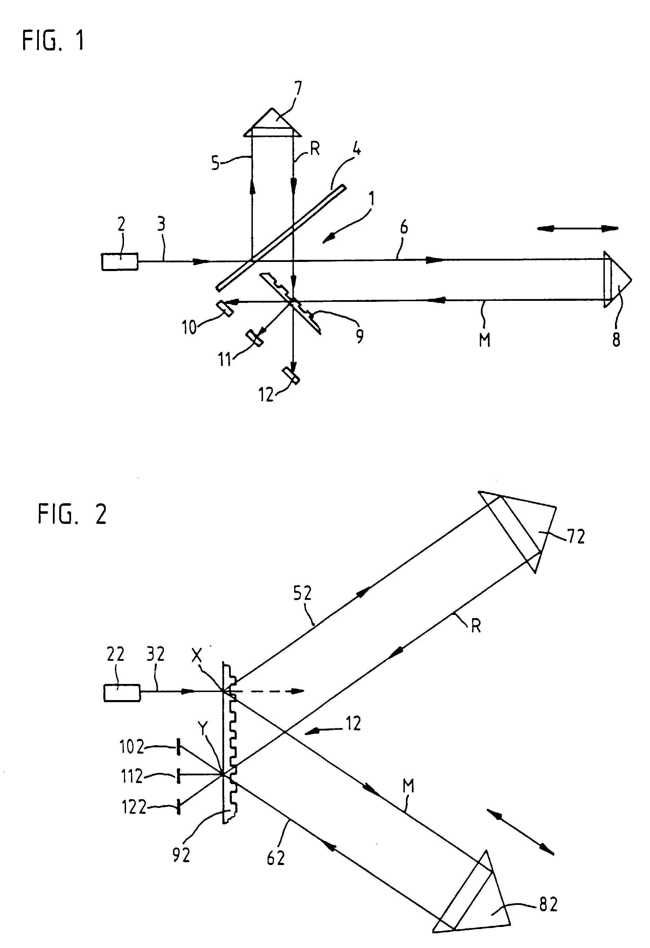

Ein in Figur 1 dargestellter Prinzipaufbau eines Michelson-Interferometers 1 weist als Lichtquelle 2 einen Laser auf, der ein kohärentes Strahlenbündel 3 aussendet. An einem Strahlteiler 4 werden aus dem Strahlenbündel 3 zwei Teilstrahlenbündel 5 und 6 erzeugt. Dabei bildet das Teilstrahlenbündel 5 den Referenzarm R und das Teilstrahlenbündel 6 den Meßarm M.

Beide Teilstrahlenbündel 5 und 6 durchlaufen ein ihnen jeweils zugeordnetes Reflexionselement, hier in Form von Tripel-Spiegeln 7 und 8. Die von den Tripel-Spiegeln 7 und 8 reflektierten Teilstrahlenbündel 5 (R) und 6 (M) treffen am selben Ort auf ein Beugungsgitter 9, welches als Strahlvereiniger fungiert.

Am Beugungsgitter 9 werden die eintretenden Teilstrahlenbündel 5 (R) und 6 (M) jeweils in verschiedene Ordnungen gebeugt, beispielsweise in die 0., 1. und 2. Ordnung und interferieren miteinander in drei resultierenden Richtungen. Dabei ergeben sich zueinander phasenverschobene Intensitäts-Modulationen, die von drei Sensoren 10, 11, 12 detektiert und in bekannter Weise in zueinander phasenverschobene elektrische Signale umgewandelt werden.

Durch die spezielle Ausgestaltung des Beugungsgitters 9 (Gitterkonstante, Steghöhe, Stegbreite) sind die Größe, der Modulationsgrad und die Phasenlage der drei Signale zueinander bestimmt und müssen nicht mehr durch Justieren optimiert werden.

Damit sich die aus den Teilstrahlenbündeln 5 (R) und 6 (M) gebeugten Strahlenbündel 0., 1. und 2. Ordnung jeweils paarweise überlagern und miteinander interferieren können, sind die Einfallswinkel der Teilstrahlenbündel 5 (R) und 6 (M) auf das Gitter 9, die Wellenlänge des verwendeten Lichtes und die Gitterkonstante des Phasengitters 9 aufeinander abzustimmen.

Dieses Erfordernis führt zu der besonders vorteilhaften Ausführungsform eines Interferometers 12 gemäß Figur 2. Der besondere Vorteil liegt dort darin, daß ein Phasengitter 92 sowohl zur Strahlteilung als auch zur Strahlvereinigung dient.

Die am Beugungsgitter 92 gebeugten Teilstrahlenbündel 52 (R) und 62 (M) treffen nach der Reflexion an den Tripel-Spiegeln 72 und 82 zwangsläufig wieder in exakt richtigem Winkel auf das Beugungsgitter 92, werden dort erneut gebeugt und interferieren paarweise miteinander. Drei Detektoren 102, 112, 122 wandeln die interferierenden Strahlenpaare in elektrische Signale um, die zueinander eine Phasenverschiebung von jeweils 120° aufweisen.

Diese bevorzugte Ausführungsform weist ein Minimum an Bauteilen auf, so daß auch der Justieraufwand minimiert ist. Lediglich eine Lichtquelle 22, ein Phasengitter 92, zwei Reflektoren 72, 82 und drei Detektoren 102, 112, 122 sind funktionell für ein derartiges Interferometer 12 erforderlich.

Dabei ist es von Vorteil, daß das Phasengitter 92 am Strahlteilungsort X zwar die gleiche Gitterkonstante hat wie am Strahlvereinigungsort Y, jedoch eine andere Steghöhe und Stegbreite, um möglichst wenig Licht in unbenützte Ordnungen zu beugen.

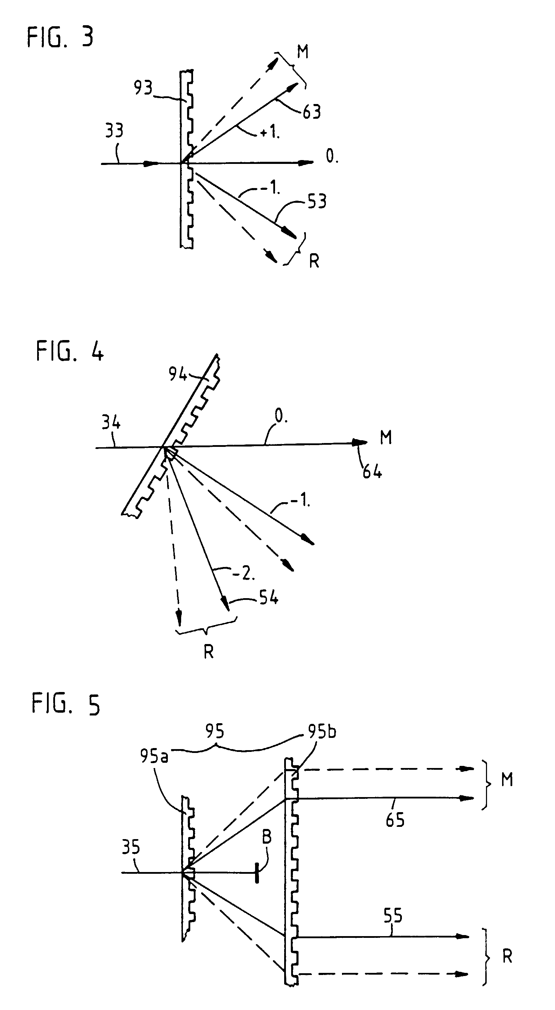

Wie in Figur 3 dargestellt ist, sind derartige Interferometer empfindlich gegenüber Änderungen von Gitterkonstante und/oder Wellenlänge.

Eine Vergrößerung der Wellenlänge führt z.B. zu einer Vergrößerung der Beugungswinkel (gestrichelte Linien in Figur 3). Das hat zwar keinen Einfluß auf die Phasenauswertung selbst, doch würde sich dadurch die Meßrichtung bzw. bei fest vorgegebener Richtung kosinus-abhängig die gemessene Länge ändern. Deswegen muß sowohl die Wellenlänge als auch die Gitterkonstante des Gitters 93 konstant gehalten werden (z.B. durch Verwendung eines Referenzinterferometers und eine Nachregelung der Laserfrequenz und durch Herstellung des Gitters aus Materialien mit niedrigem thermischen Ausdehnungskoeffizienten wie Quarz oder Werkstoff mit dem Handelsnamen Zerodur). Falls diese Konstanz aus irgendwelchen Gründen nicht eingehalten werden kann, weil z.B. für Absolutmessungen die Wellenlänge bewußt durchgestimmt werden soll, kann das Problem wie in Figur 4 dargestellt, behoben werden:

Statt das Aufspaltgitter 94 senkrecht zu beleuchten und die ±1. Beugungsordnung auszunutzen, kann man den Laserstrahl 34 schräg auf das Gitter 94 auftreffen lassen (Figur 4) und die 0. und -2. Beugungsordnung ausnutzen. Die Richtung der 0. Beugungsordnung, die in den Meßarm M geht, ist von Gitterkonstante und Wellenlänge unabhängig und ändert damit ihre Richtung nicht. Die Richtung der -2. Beugungsordnung, die den Referenzarm R speist, ändert sich, aber da der Referenzarm R im allgemeinen kurz ist, fällt die damit verbundene Änderung der Länge des Referenzarmes R nicht ins Gewicht.

In Figur 5 ist eine Gittereinzelheit dargestellt, bei der die im allgemeinen fehlerverursachenden Einflüsse der vorstehend genannten Art sich nicht mehr negativ auswirken können. Dies wird durch den geringen Mehraufwand eines zweiten Gitters 95b erkauft, welches hinsichtlich seiner Parameter mit dem ersten Gitter 95a identisch und zu diesem parallel angeordnet ist. Diese Gitteranordnung kann als achromatisches Gitterelement 95 bezeichnet werden, das auch aus dem oben beschriebenen Gitter 95a besteht und bei dem das zweite Gitter 95b auch aus einem Gitter mit zwar identischer Gitterkonstante, jedoch abweichender Steghöhe und Stegbreite bestehen kann. Bei einer Änderung der Wellenlänge oder einer für beide Gitter 95a, 95b gleichen Änderung der Gitterkonstante werden die Strahlenbündel 55, 65 nur parallel verschoben, was auf die Messung und die Meßgenauigkeit keinerlei Einfluß hat.

Die nullte (0.) Ordnung kann durch eine Blende B ausgeblendet werden.

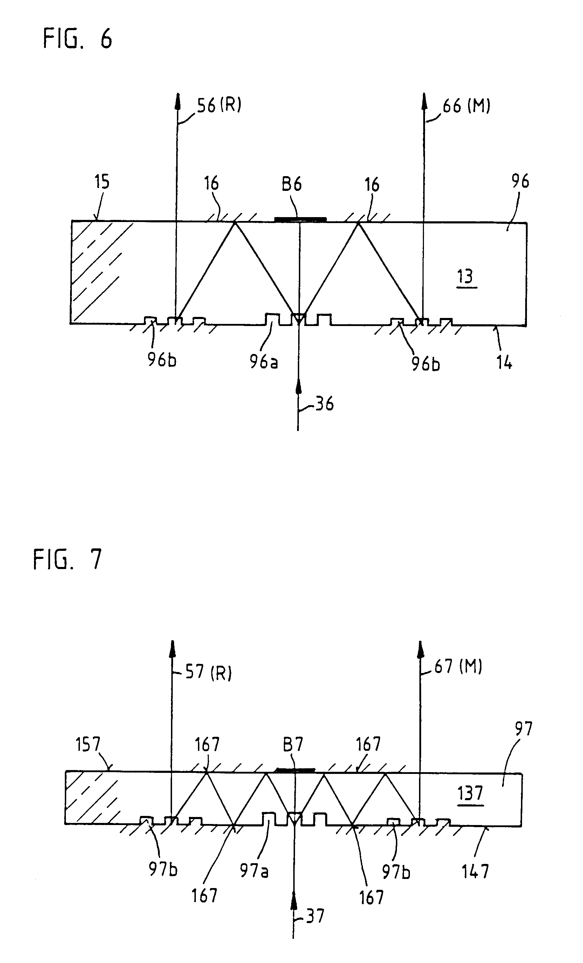

In Figur 6 ist ein Gitterelement 96 gezeigt, bei dem in einer Ebene 14 mehrere Teilgitter 96a und 96b angeordnet sind. Das Substrat 13 ist auf der den Teilgittern 96a und 96b gegenüberliegenden Oberfläche 15 in Teilbereichen 16 verspiegelt.

Ein vom Teilgitter 96a in Teilstrahlenbündel 56 und 66 ±1. Ordnung aufgespaltenes Eingangs-Strahlenbündel 36 liefert die Teilstrahlenbündel für den Referenz R- und Meßarm M. Diese Teilstrahlenbündel 56 bzw. R und 66 bzw. M werden an den verspiegelten Oberflächenbereichen 16 reflektiert und auf die Teilgitter 96b gelenkt. Dort werden sie gebeugt und nochmals reflektiert, so daß sie als Referenz R- und Meßarm M im wesentlichen parallel zum Eingangs-Strahlenbündel 36 aus dem Substrat 13 austreten.

Wie in Figur 7 dargestellt, können die Teilstrahlenbündel 57 bzw. R und 67 bzw. M durch entsprechend verspiegelte Teilbereiche 167 der Oberflächen 147 und 157 des Substrates 137 auch mehrfach reflektiert werden. Im Übrigen entspricht diese Anordnung jener gemäß Figur 6.

Auch bei diesen Ausführungsbeispielen kann die 0. Ordnung durch Blenden B6 und B7 ausgeblendet werden.

Durch die beiden vorstehend beschriebenen Ausführungsformen läßt sich die Baulänge des Gitterelementes abhängig von der Anzahl der Reflexionen auf mindestens die Hälfte reduzieren.

## Patentansprüche

1. Interferometer (1) mit einem Referenzstrahlengang (R ) und einem Meßstrahlengang (M), die mittels eines Strahlteilers (4) aus einem kohärenten Strahlenbündel (3) erzeugt werden, und mittels Reflektoren (7, 8) auf einen Strahlvereiniger (9) zurückgeworfen, von diesem zur Interferenz gebracht und von Detektoren (10, 11, 12) detektiert werden, wobei der Strahlvereiniger als Phasengitter (9) ausgebildet ist und mit Hilfe der Detektoren (10, 11, 12) zueinander phasenverschobene Interferenz-Signale zur richtungsabhängigen Meßwertbildung gewonnen werden,
dadurch gekennzeichnet, daß
am Phasengitter (9) eine Beugung der eintretenden Teilstrahlenbündel des Referenz- (R) und Meßstrahlenganges (M) in unterschiedliche Ordnungen erfolgt und in jeder Beugungsordnung ein Paar interferierender Teilstrahlenbündel vorliegt, das jeweils als Interferenz-Signal am zugeordneten Detektor (10, 11, 12) detektierbar ist und der resultierende Phasenversatz zwischen den Interferenz-Signalen verschiedener Detektoren (10, 11, 12) durch die Gitterparameter des Phasengitters (9), wie Gitterkonstante, Steghöhe, Stegbreite bestimmt ist.

2. Interferometer nach Anspruch 1, dadurch gekennzeichnet, daß durch das Phasengitter (92) sowohl der Strahlteiler als auch der Strahlvereiniger realisiert wird.

3. Interferometer nach Anspruch 2, dadurch gekennzeichnet, daß das Phasengitter (92) am Strahlteilungsort (X) und am Strahlvereinigungsort (Y) die gleiche Gitterkonstante, jedoch unterschiedliche Steghöhen und/oder Stegbreiten aufweisen.

4. Interferometer nach Anspruch 1, dadurch gekennzeichnet, daß das Phasengitter durch ein Gitterelement (95) realisiert ist, welches aus zwei zueinander parallel angeordneten Phasengittern (95a, 95b) mit identischen Gitterparametern besteht.

5. Interferometer nach Anspruch 1, dadurch gekennzeichnet, daß das Phasengitter durch ein Gitterelement (95) realisiert ist, welches aus zwei zueinander parallel angeordneten Phasengittern (95a, 95b) mit identischen Gitterkonstanten jedoch abweichenden Steghöhen und Stegbreiten besteht.

6. Interferometer nach Anspruch 4 oder 5, dadurch gekennzeichnet, daß die zwei parallelen Phasengitter (95a, 95b) starr miteinander verbunden sind.

7. Interferometer nach Anspruch 1, dadurch gekennzeichnet, daß das Phasengitter (97) durch ein Gitterelement realisiert ist, welches auf einem Substrat (13; 137) mehrere Teilgitter (96a, 96b; 97a, 97b) aufweist, die bevorzugt in einer teilverspiegelten Ebene (14; 147) angeordnet sind, und bei dem die dieser Ebene (14; 147) gegenüberliegende Oberfläche (15; 157) des Substrates (13; 137) in Teilbereichen (16; 167) ebenfalls reflektierend ist.

8. Interferometer nach Anspruch 7, dadurch gekennzeichnet, daß eines der Teilgitter (96a; 97a) das eintretende Strahlenbündel (36; 37) in Teilstrahlenbündel (56, 66; 57, 67) ±1. Ordnung aufspaltet, welche an den Teilbereichen (16; 167) reflektiert, auf die weiteren Teilgitter (96b; 97b) gerichtet, an ihnen gebeugt werden und im wesentlichen parallel zum Eingangs-Strahlenbündel (36; 37) als Referenz (R)- und Meßarm (M) aus dem Substrat (13; 137) austreten.

9. Interferometer nach Anspruch 7, dadurch gekennzeichnet, daß das Substrat (137) derart mit reflektierenden Teilbereichen (167) ausgestattet ist, daß die Teilstrahlenbündel (57, 67) im Substrat (137) mehrfach reflektiert bzw. gebeugt werden, bevor sie im wesentlichen parallel zum Eingangs-Strahlenbündel (37) als Referenz (R)- und Meßarm (M) aus dem Substrat (137) austreten.

10. Interferometer nach Anspruch 7, dadurch gekennzeichnet, daß die Teilgitter (96a, 96b; 97a, 97b) identische Gitterparameter aufweisen.

11. Interferometer nach Anspruch 7, dadurch gekennzeichnet, daß die Teilgitter (96a, 96b; 97a, 97b) identische Gitterkonstanten, jedoch unterschiedliche Steghöhen und Stegbreiten aufweisen.

## Claims

1. An interferometer (1) with a reference beam path (R) and a measuring beam path (M), which are formed by means of a beam splitter (4) from a coherent bundle of rays (3), and which are projected by means of reflectors (7, 8) on to a beam combiner (9), brought into interference thereby and detected by detectors (10, 11, 12), wherein the beam combiner is in the form of a phase grating (9) and mutually phase-displaced interference signals are derived by means of the detectors (10, 11, 12) for direction-dependent measured value formation, characterized in that diffraction of the incident component bundles of rays of the reference beam path (R) and the measuring beam path (M) takes place at the phase grating (9) in different orders and a pair of interfering component bundles of rays is present in each diffraction order and can be detected as an interference signal at the associated detector (10, 11, 12), and the resultant phase displacement between the interference signals of different detectors (10, 11, 12) is determined by the grating parameters of the phase grating (9), such as grating constant, line height, line width.

2. An interferometer according to claim 1, characterized in that both the beam splitter and the beam combiner are realised by the phase grating (92).

3. An interferometer according to claim 2, characterized in that the phase grating (92) has the same grating constants but different line heights and/or line widths at the beam splitting location (X) and at the beam combining location (Y).

4. An interferometer according to claim 1, characterized in that the phase grating is realised as a grating element (95) which consists of two mutually parallel phase gratings (95a, 95b) with identical grating parameters.

5. An interferometer according to claim 1, characterized in that the phase grating is realised as a grating element (95) which consists of two mutually parallel phase gratings (95a, 95b) with identical grating constants but differing line heights and line widths.

6. An interferometer according to claim 4 or 5, characterized in that the two parallel phase gratings (95a, 95b) are rigidly connected together.

7. An interferometer according to claim 1, characterized in that the phase grating (97) is realised as a grating element which has a plurality of component gratings (96a, 96b; 97a, 97b) on a substrate (13; 137) and which are preferably disposed in one partially silvered plane (14, 147) and in which the surface (15; 157) of the substrate (13; 137) opposite this plane (14; 147) is also reflecting in part regions (16; 167).

8. An interferometer according to claim 7, characterized in that one of the component gratings (96a; 97a) splits the incident bundle of rays (36; 37) into component bundles of rays (56, 66; 57, 67) of order ± 1, which are reflected at the part regions (16; 167), directed on to the further component gratings (96b; 97b), where they are diffracted, and emerge from the substrate (13; 137) substantially parallel to the input bundle of rays (36; 37) as the reference arm (R) and measuring arm (M).

9. An interferometer according to claim 7, characterized in that the substrate (137) is so provided with reflecting part regions (167) that the component bundles of rays (57, 67) are multiply reflected or diffracted in the substrate (137) before they emerge from the substrate (137) substantially parallel to the input bundle of rays (37) as the reference arm (R) and measuring arm (M).

10. An interferometer according to claim 7, characterized in that the component gratings (96a, 96b; 97a, 97b) have identical grating parameters.

11. An interferometer according to claim 7, characterized in that the component gratings (96a, 96b; 97a, 97b) have identical grating constants but different line heights and line widths.

## Revendications

1. Interféromètre (1) comportant un trajet optique de référence (R) et un trajet optique de mesure (M) qui sont produits à partir d'un faisceau (3) cohérent de rayons lumineux à l'aide d'un diviseur (4) et sont réfléchis sur un recombinateur (9) à l'aide de réflecteurs (7, 8), sont amenés en interférence par ce dernier et sont détectés par des détecteurs (10, 11, 12), le recombinateur étant réalisé sous la forme d'un réseau de phase (9) et des signaux d'interférence déphasés les uns par rapport aux autres étant formés au moyen des détecteurs (10, 11, 12) à des fins de calcul de la valeur de mesure en fonction de la direction, caractérisé par le fait qu'il se produit sur le réseau de phase (9) une diffraction dans différents ordres des faisceaux partiels incidents des trajets optiques de référence (R) et de mesure (M) et que l'on obtient dans chaque ordre de diffraction un couple de faisceaux dérivés en interférence qui est détecté en tant que signal d'interférence au niveau du détecteur concerné et par le fait que le déphasage résultant entre les signaux d'interférence de différents détecteurs (10, 11, 12) est déterminé par les paramètres de réseau du réseau de phase (9), tels que la constante de réseau, la hauteur de cloison, la largeur de cloison.

2. Interféromètre selon la revendication 1, caractérisé par le fait que le réseau de phase (92) constitue à la fois le diviseur de faisceau et le recombinateur de faisceau.

3. Interféromètre selon la revendication 2, caractérisé par le fait que le réseau de phase (92) présente, au point (X) de division du faisceau et au point (Y) de recombination des faisceaux, la même constante de réseau avec toutefois des hauteurs de cloison et/ou des largeurs de cloisons différentes.

4. Interféromètre selon la revendication 1, caractérisé par le fait que le réseau de phase est constitué d'un élément à réseau (95) qui est formé de deux réseaux de phase (95a, 95b) avec des paramètres de réseau identiques qui sont disposés parallèlement l'un à l'autre.

5. Interféromètre selon la revendication 1, caractérisé par le fait que le réseau de phase est constitué d'un élément à réseau (95) qui est formé de deux réseaux de phase (95a, 95b), disposés parallèlement l'un à l'autre qui présentent des paramètres de réseau identiques mais des hauteurs de cloison et des largeurs de cloison différentes.

6. Interféromètre selon la revendication 4 ou 5, caractérisé par le fait que les deux réseaux de phase (95a, 95b) parallèles sont liés rigidement l'un à l'autre.

7. Interféromètre selon la revendication 1, caractérisé par le fait que le réseau de phase (97) est constitué d'un élément à réseau qui comporte, sur un substrat (13; 137), plusieurs réseaux divisionnaires (96a, 96b; 97a, 97b) qui sont disposés dans un plan (14; 147) partiellement réfléchissant et dans lequel la surface (15, 157) du substrat (13, 137) en vis-à-vis dudit plan (14; 147) est également réfléchissante dans des zones partielles (16; 167).

8. Interféromètre selon la revendication 7, caractérisé par le fait que l'un des réseaux divisionnaires (96a, 97a) divise le faisceau (36; 37) incident en faisceaux (56, 66; 57, 67) partiels de rayons, d'ordre ±1, qui sont réfléchis sur les zones (16; 167) partielles, sont dirigés sur les autres réseaux (96b; 97b) partiels, sont diffractés sur ceux-ci et sortent du substrat (13; 137), sensiblement parallèlement aux faisceau (36, 37) incident, en tant que branche de référence (R) et que branche de mesure (M).

9. Interféromètre selon la revendication 7, caractérisé par le fait que le substrat (137) est pourvu de zones partielles (167) réfléchissantes de manière telle que les faisceaux partiels (57, 67) soient réfléchis et diffractés plusieurs fois dans le substrat (137) avant de sortir dudit substrat (137), sensiblement parallèlement aux faisceau (36, 37) incident, en tant que branche de référence (R) et que branche de mesure (M).

10. Interféromètre selon la revendication 7, caractérisé par le fait que l'un des réseaux divisionnaires (96a, 96b; 97a, 97b) présentent des paramètres de réseau identiques.

11. Interféromètre selon la revendication 7, caractérisé par le fait que l'un des réseaux divisionnaires (96a, 96b; 97a, 97b) présentent des constantes de réseau identiques, mais des hauteur de cloison et des largeurs de cloison différentes.
